Europäisches Patentamt

European Patent Office

Office européen des brevets

(11) Publication number: **0 167 135**
**A1**

# EUROPEAN PATENT APPLICATION

(21) Application number: 85108074.7

(22) Date of filing: 28.06.85

(51) Int. Cl.⁴: **B 23 K 9/20**

(30) Priority: 30.06.84 JP 136271/84

(43) Date of publication of application:
08.01.86 Bulletin 86/2

(84) Designated Contracting States:
DE FR GB IT NL SE

(71) Applicant: Kabushiki Kaisha Nippon Suichu Sagyo
951-1 Toriyama-cho Kohoku-ku
Yokohama-shi Kanagawa-ken(JP)

(72) Inventor: Kon, Toshiharu c/o K.K. Nippon Suichu Sagyo
951-1 Toriyama-cho, Kohoku-ku
Yokohama-shi Kanagawa-ken 222(JP)

(74) Representative: Glawe, Delfs, Moll & Partner
Patentanwälte
Postfach 26 01 62 Liebherrstrasse 20
D-8000 München 26(DE)

(54) Process for stud welding and stud bolt for welding.

(57) A process for welding a stud bolt on a base metal shows the following features: The base metal (30) and stud bolt (10) are placed in contact with each other through an electrode element (11) with a distance between the base metal (30) and the stud bolt (10) being equal to 30-55% of the maximum diameter of the forward end surface of the stud bolt (10), an electric current is applied between the stud bolt (10) and the base metal (30) to produce an arc discharge, and the arc discharge being maintained for a predetermined time of period to fuse the stud bolt (10) and the base metal (30), and the stud bolt is driven from its position into the surface of the base metal.

./...

EP 0 167 135 A1

F I G. I

Process for stud welding and stud bolt
for welding
--------------------------------------------------------

The present invention relates to a process for welding a
stud bolt to a base metal by means of a welding gun on land
or underwater and to the structure of the stud bolt used for
working the process.

In general, firmly welding the stud bolt to the base metal
is carried out by fusing the base metal and the stud bolt
through arc discharge and electric resistance heat which
are generated between the base metal and the stud bolt.

In this case, such a device as an electrode element in the
form of a small projection of about 1,0 to 0,5 mm in height
is used which is firmly fixed to a central zone in the forward
end surface of the stud bolt thereby to obtain a better electrical contact between the base metal and the stud bolt. The
process for welding the stud bolt on the base metal by means
of the electrode element comprises the steps of :

- Producing the pilot arc by making the electrode element
  contact with the base metal surface,
- lifting the stud bolt from the base metal surface in an
  instant for a distance of a few to ten-odd mm, while maintaining the electrical discharge thereby to broaden the
  electrical discharge width and keep a distance enough to
  drive the stuld bolt,

- pressing and driving in the stud bolt by a spring and the like.

However, the above welding process has the following drawbacks:

(1)   It is necessary to install a solenoid or an electromagnet inside the welding gun in order to lift the stud bolt from the base metal in an instant, and this requires a large electric power consumption because the solenoid or the electromagnet should be stronger in capacity than the force of the spring for pressing and driving the stud bolt.

(2)   The operator of the machine is apt to receive electric shock because high electric current flows through the welding gun during the process of (1) above. Especially, the danger of electric shock is great in the case of underwater operation.

(3)   When a thick stud bolt is welded, a sufficient area of arc discharge is not available because a distance for lifting the stud bolt from the base metal is not related to a size of the forward end surface of the stud bolt. Hence, a fused area of the base metal becomes smaller and the welding strength becomes insufficient.

The present invention is to eliminate the abovementioned drawbacks of prior art. Objets of this invention are :

(1)   To provide a process for welding a stud bolt wherein a base metal can be fused according to the size of the stud bolt or the area of the forward end surface of the stud bolt.

(2)   Another object of this invention is to provide the process for stud welding and the structure of the stud bolt which do not require high electric current that may cause the danger of electric shock to the operator.

(3)   A further object of this invention is to provide the process for stud welding and the structure of the stud bolt which are suited for electric power-saving.

The objects of this invention can be attained by :

- A process for welding a stud bolt on a base metal characterized in that

- the base metal and stud bolt are placed in contact with each other through an electrode element with a distance  between the base metal and the stud bolt being equal to 30 to 55% of the maximum diameter of the forward end surface of the stud bolt,

- an electric current is applied between the stud bolt and the base metal to produce an arc discharge, and the arc discharge being maintained for a predetermined time of period to fuse the stud bolt and the base metal, and

- the stud bolt is driven from its position into the surface of the base metal.

- A stud bolt for welding characterized in that an electrode element is provided on the forward end surface of the stud bolt to projecting therefrom, and a length of said electrode element is maintained between 30 to 55% of the maximum diameter of the forward end surface of said stud bolt.

Now the present invention will be described in detail by way of examples by referring to the accompanying drawings.

Fig. 1 is a schematic view showing the structure of an example of this invention; and

Fig. 2 to 4 are partially omitted sectional views illustrating the welding process and stud bolt according to the present invention.

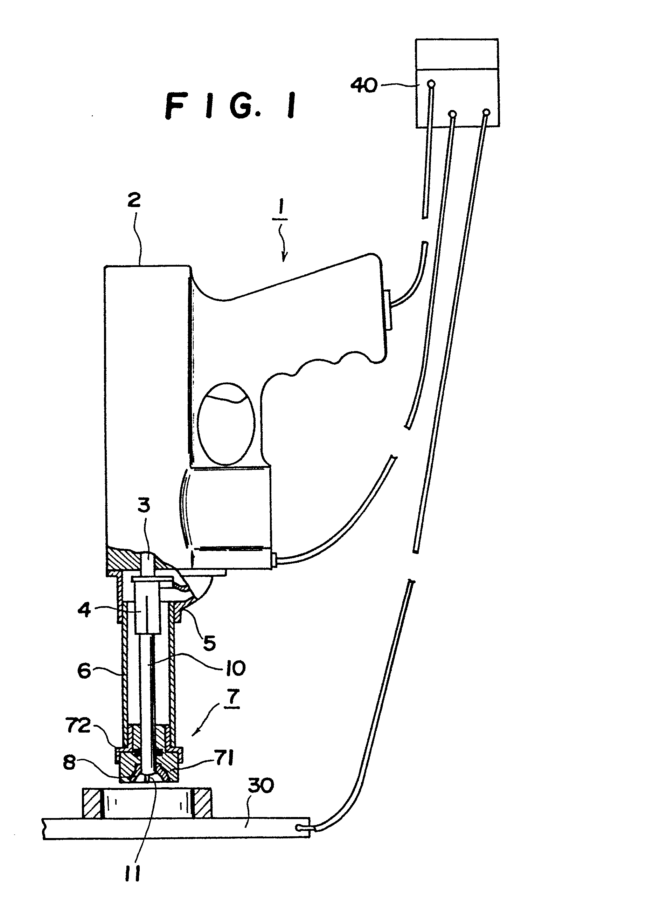

Fig. 1 shows an example of this invention used for underwater welding operation.

Numeral 1 is a stud welding gun, a piston rod 3, a chuck 4, a cover 5 and a gun barrel 6 fixed to the cover 5 are mounted on the front zone of a gun body 2 water-tightly. Numeral 71 is a water sealing member made of a heat resisting material fitted to a gun muzzle 7 of the gun barrel 6 by metal fixtures 72 and the forward end of its through-hole is formed
in a curved recess. Numeral 8 is an arc shield having a
non-through-hole firmly fixed to said curved recess, and 40
is an electrical control mechanism installed on land for
adjusting the welding current. For the above structure,
known structure and materials may be used. A stud bolt 10
of the present invention penetrates through the water sealing member 71 water-tightly, with the base of the stud
bolt being secured by the chuck 4 and having its forward
end surface abutting the inside of the arc shield 8.
Numeral 11 is a conductive electrode element in the form
of a bar or a wire which is provided to project from approximately the central zone of the forward end surface of the
stud bolt 10, and its length is maintained at 45 % of the
maximum width of the forward end surface of the stud bolt.
Further, known mechanism for pressing the stud bolt and
machine power switch are built inside the gun body 2. Numeral 30 is a base metal made of a magnetic material, such as
an iron or a stainless steel sheet and the like.

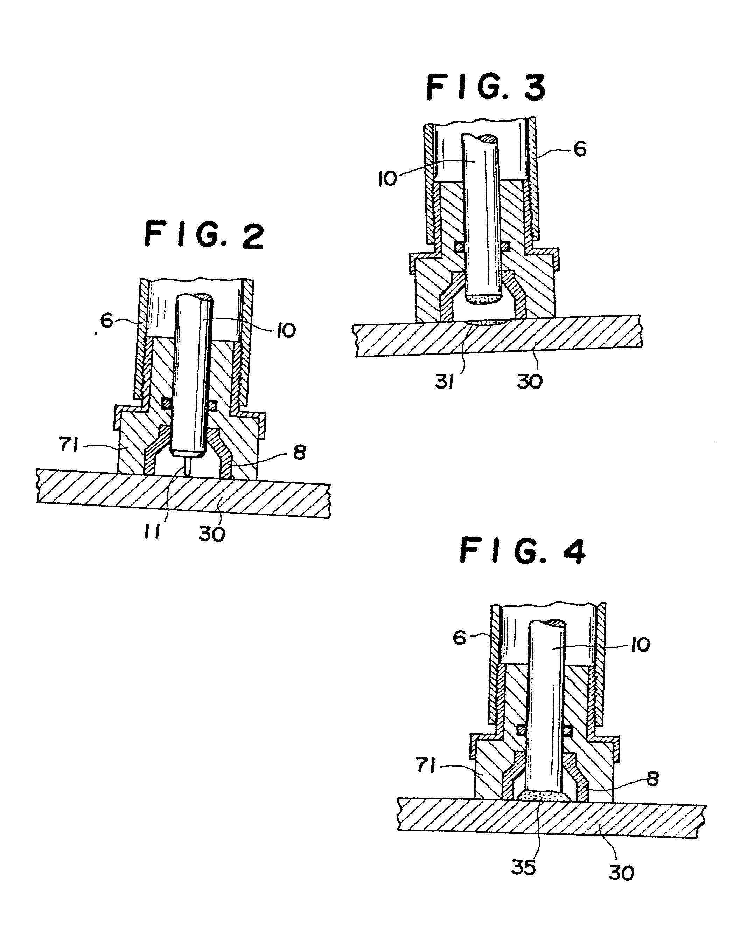

The features of the welding process according to this invention are as shown in fig. 2 to 4 that the stud bolt 10 can
be welded without being separated from the location on the
base metal to be welded, while keeping a sufficient arc discharging time during a period from beginning to completion of the welding operation.

In other words, as shown in fig. 2, when the electrode element is placed to contact a location on the base metal surface to be welded and the welding current is applied, the electrode element 11 is fused and disappeared in an instant by resistance heat generated through short-circuit, whereupon the arc discharge begins, and the base metal 30 and the stud bolt 10 are fused, as shown in fig. 3. At this time, the base metal surface is separated from the forward end surface of the stud bolt for a distance equivalent to a length of the electrode element, and a cross-sectional area of discharge arc corresponds with that length. Hence, because the fused zone 31 of the base metal is formed to have such an area as corresponding to a diameter of the stud bolt 10, a proper amount of uniform excess fused zone 35 is always swollen and solidified around the stud bolt when the arc discharge is maintained for a period from 0,4 to 0,9 seconds, or preferably from about 0,4 to 0,6 seconds. Then the stud bolt 10 is pressed and driven from its position, as shown in fig. 4.

Effects of the invention :
- According to the present invention, the mechanism for pressing the stud bolt is locked by a timer-controlled locking mechanism (not shown) and the arc discharge is maintained at a predetermine distance.

- The present invention does not require high electric current of lift up the stud bolt during the arc discharge. Thus, there is no danger of occurrence of electic shock accident during operations and consumption of large electric power is eliminated.

- Further, since a proper area of the fused zone can be always formed on the base metal irrespective of the stud bolt diameter, the strength of stud weld can be made uniform and stabilized after driving and solidification of the stud bolt, and optimal welding results can be obtained, and available percentage or yield of materials and working efficiency can be improved as well. Further since there is no shock caused by solenoid operation when the stud bolt is lifted, occurrence of warping of welding point can be eliminated and the correct welding operations can be accomplished without requiring any skill.

- As discussed above, the present invention has various effects in the field operations.

- Further, because of the simple construction, the present invention provides a great usefullness such as low cost and easy application to the known welding gun.

## C l a i m s

1.  A process for welding a stud bolt on a base metal characterized in that

the base metal and the forward end of the stud bolt are placed in contact with each other through an electrode element with a distance between said forward end of the stud bolt and the base metal being equal to 30 to 55% of the maximum diameter of the forward end surface of the stud bolt,

an electric current is applied between the stud bolt and the base metal to produce an arc discharge, and the arc discharge being maintained for a predetermined time of period to fuse the stud bolt and the base metal, and the stud bolt is driven from its position into the surface of the base metal.

2.  The process according to claim 1 wherein the arc discharge is maintained for a period from 0,4 to 0,9 seconds.

3.  A stud bolt for welding characterized in that an electrode element is provided on the forward end surface of the stud bolt to projecting therefrom and a length of said electrode element is maintained between 30 to 60% of the maximum diameter of the forward end surface of said stud bolt.

4.   The stud bolt according to claim 3 wherein the maximum diameter of the forward end surface is above  8 mm.

FIG. I

# FIG. 3

# FIG. 2

# FIG. 4

**European Patent Office**

# EUROPEAN SEARCH REPORT

| | DOCUMENTS CONSIDERED TO BE RELEVANT | | EP 85108074.7 |
| --- | --- | --- | --- |

| Category | Citation of document with indication where appropriate, of relevant passages | Relevant to claim | CLASSIFICATION OF THE APPLICATION (Int Cl 4) |
| --- | --- | --- | --- |
| A | US - A - 2 518 463 (H.J. GRAHAM)<br>* Fig. 1,5-10 *<br>-- | 1-4 | B 23 K 9/20 |
| A | US - A - 4 160 148 (JENKINS)<br>* Fig. 2 *<br>---- | | |
| | | | **TECHNICAL FIELDS SEARCHED (Int Cl 4)**<br><br>B 23 K 9/00 |

| The present search report has been drawn up for all claims | | |
| --- | --- | --- |
| Place of search<br>VIENNA | Date of completion of the search<br>19-09-1985 | Examiner<br>BENCZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document